# EUROPÄISCHE PATENTANMELDUNG

(11) **EP 4 206 056 A1**
(43) Veröffentlichungstag der Anmeldung: **05.07.2023**
(21) Anmeldenummer: 22216750.4
(22) Anmeldetag: 27.12.2022
(51) Int. Cl.: B61G 11/12, F16B 37/00, F16F 9/10

(54) **PUFFER, INSBESONDERE FÜR EIN SCHIENENFAHRZEUG**

(30) Priorität: 03.01.2022 CH 62022
(71) Anmelder: Faiveley Transport Schwab AG, 8207 Schaffhausen (CH)
(72) Erfinder: PLECKO, Marijan, 8200 Schaffhausen (CH); FAAS, Stefan, 9050 Appenzell (CH)
(74) Vertreter: Luchs, Willi

(57) **Zusammenfassung**

Ein Puffer (10), insbesondere für ein Schienenfahrzeug, ist mit einer eine Druckkammer (11) bildenden Pufferhülse (1), einem an dieser stirnseitig durch einen Verbindungsflansch (2) befestigbaren Gelenkkopf (3) und einem gegenüberliegend in der Pufferhülse (1) längsverschiebbar gelagerten Pufferstössel (4) versehen. Der Gelenkkopf (3) ist am Schienenfahrzeug anlenkbar, während der Pufferstössel (4) vorzugsweise mit einem Kupplungskopf verbindbar ist. Der Verbindungsflansch (2) weist an seinem Aussenmantel ein Aussengewinde auf, welches mit einem in der Bohrung (1') der Pufferhülse (1) vorgesehenen Innengewinde zum Bilden einer lösbaren Verbindung des Gelenkkopfes mit der Pufferhülse verschraubt ist. Der Verbindungsflansch (2) ist frontseitig vorzugsweise mit einer vor dem Aussengewinde angeordneten Zentrierspitze (14) versehen, die annähernd spielfrei in der Bohrung (1') der Pufferhülse (1) verschiebbar oder einpressbar angeordnet ist. Damit ist mit einfachen konstruktiven Mitteln ein leichter Zusammenbau dieses Puffers (10) ermöglicht.

## Beschreibung

Die Erfindung betrifft einen Puffer, insbesondere für Schienenfahrzeuge, der mit einer eine Druckkammer bildenden Pufferhülse, einem an dieser stirnseitig durch einen Verbindungsflansch befestigbaren Gelenkkopf und einem gegenüberliegend in der Pufferhülse längsverschiebbar lagernden Pufferstössel versehen ist. Der Gelenkkopf ist am Schienenfahrzeug anlenkbar, während der Pufferstössel mit einem Kupplungskopf oder anderen Verbindungelementen des Schienenfahrzeugs verbindbar ist, dies nach dem Oberbegriff des Anspruchs 1.

Puffer dieser Art dienen bei Schienenfahrzeugen als Zug- und Stossvorrichtung zum Dämpfen der Druck- und Zugkräfte, die im Betrieb auf die Kupplung des Schienenfahrzeuges wirksam sind. Eine bekannte Vorrichtung gemäss der Druckschrift CH 717 058 A2 ist mit einer in der Zugstange des Fahrzeugs eingebauten Kolben-Zylindereinheit als Dämpfungseinrichtung ausgestattet, wobei der Zylinder am Gelenkkopf und der Kolben bzw. die Kolbenstange am Kupplungskopf des Schienenfahrzeugs befestigt sind.

Bekannte Puffer mit einer die Druckkammer bildenden Pufferhülse sind entweder mit einem Bajonettverschluss zwischen der Pufferhülse und dem Gelenkkopf ausgestattet. Alternativ können sie jeweils einen an die Pufferhülse befestigbaren Zentrierflansch gegenüberliegend zum Gelenkkopf aufweisen, der den Pufferstössel in der Pufferhülse hält. Der Zentrierflansch ist dabei mit einer Vielzahl von aussenseitig verteilten Befestigungsschrauben an der Pufferhülse befestigt, während auf der gegenüberliegenden Seite der Gelenkkopf mit der Pufferhülse verbunden ist. Es versteht sich von selbst, dass eine solche Konstruktion den Zusammenbau des Puffers erschwert, zumal die Montage nur von zwei Seiten mit Drehen ausführbar ist.

Die Erfindung liegt die Aufgabe zugrunde, diese Nachteile zu vermeiden und einen Puffer der eingangs genannten Art zu schaffen, der mit einfachen konstruktiven Mitteln einen leichten Zusammenbau ermöglicht, betriebssicher ist und seine Montage nur von einer Seite ohne Drehen sicherstellt.

Diese Aufgabe ist erfindungsgemäss dadurch gelöst, dass der Verbindungsflansch des Gelenkkopfs in seinem Aussenmantel ein Aussengewinde aufweist, das mit einem in der Bohrung der Pufferhülse vorgesehenen Innengewinde zum Bilden einer lösbaren Verbindung des Gelenckopfes mit der Pufferhülse zusammenwirkt, wobei der Verbindungsflansch frontseitig mit einer vor dem Aussengewinde angeordneten Zentrierspitze versehen ist, der annähernd spielfrei in der Bohrung der Pufferhülse verschiebbar ist.

Der erfindungsgemässe Puffer zeichnet sich dadurch aus, dass er durch einfaches Verschrauben der Pufferhülse mit dem Verbindungsflansch des Gelenkkopfes aufbaubar ist, welche durch die Zentrierspitze sicher koaxial zueinander geführt sind, wobei ihre endgültige Einbaulage relativ zueinander genau durch die als Anschlag dienende Abstufung der Pufferhülse bestimmt wird.

Der erfindungsgemässe Puffer hat zudem den Vorteil, dass sowohl das Aussen- und Innengewinde als auch die Zentrierspitze und die als Anschlag dienende Abstufung im Inneren der Pufferhülse gut geschützt sind.

Sehr vorteilhaft weist die Bohrung der Pufferhülse hinter dem Innengewinde eine ringförmige Abstufung auf, die als Anschlag für den Verbindungsflansch in der Pufferhülse dient.

Bei dieser Konstruktion ist es zudem zweckmässigerweise möglich, mindestens ein von aussen zugängliches Verdrehsicherungsmittel vorzusehen, mit welchem der Verbindungsflansch des Gelenkkopfes im zusammengebauten Zustand an der Pufferhülse blockiert ist. Vorteilhafterweise kann der Puffer mit zwei diametral zueinander angeordneten Verdrehsicherungsmitteln versehen sein.

Im Sinne einer einfachen Handhabung und einer betriebssicheren Funktion ist es hierbei zweckmässig, wenn die Verdrehsicherungsmittel als in Ausnehmungen der Pufferhülse und des Verbindungsflansches eingreifende Klemmschuhe ausgebildet sind, die am Verbindungsflansch mit radial angeordneten Schrauben fixiert sind.

Die Erfindung sieht ferner vor, dass der Pufferstössel mit einer die freie Verschiebbarkeit des Pufferstössels in der Pufferhülse sicherstellenden Verdrehsicherung versehen ist. Es ist dabei zweckmässig, wenn die sich aus zwei zwischen Pufferstössel und Pufferhülse diametral zueinander angeordneten Längskeilen und korrespondierenden Längsnuten zusammensetzt. Hierbei ist es auch von Vorteil, dass die Verdrehsicherung im Innenraum der Pufferhülse gut geschützt ist.

Die Erfindung wird nachfolgend anhand von Ausführungsbeispielen unter Bezugnahme auf die Zeichnung näher erläutert. Es zeigen:
- Fig. 1: eine perspektivische Ansicht eines erfindungsgemässen Puffers,
- Fig. 2: den Puffer nach Fig. 1 in einem perspektivischen Längsschnitt dargestellt, und
- Fig. 3: einen vergrösserten Schnitt des Details X nach Fig. 2.

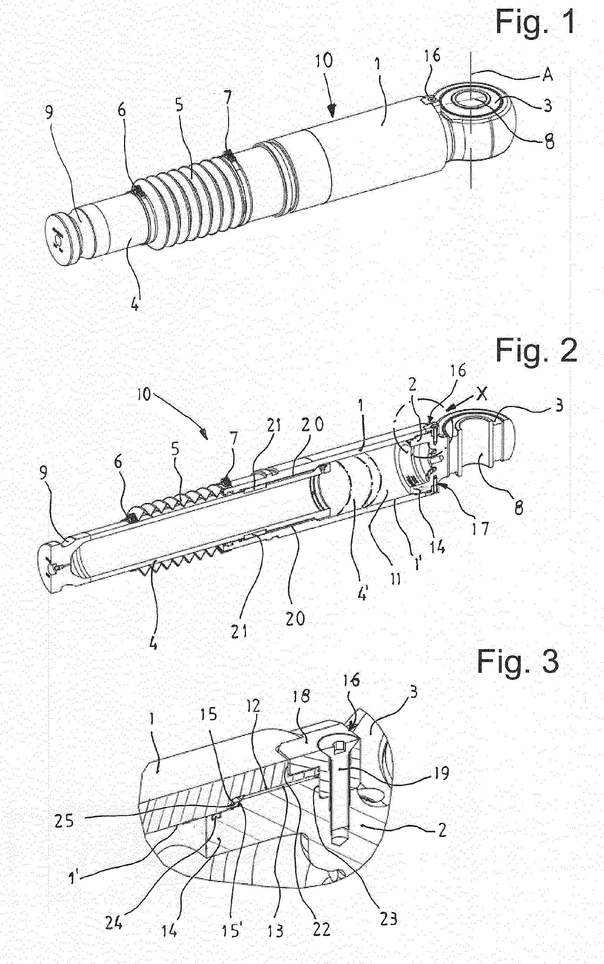

Der Puffer 10 gemäss Fig. 1 bis Fig. 3 setzt sich aus einer Pufferhülse 1, einem an dieser stirnseitig durch einen Verbindungsflansch 2 befestigbaren Gelenkkopf 3 und einem gegenüberliegend in der Pufferhülse 1 längsverschiebbar gelagerten Pufferstössel 4 zusammen. Zudem ist ein Abdichtungsbalg 5 aussen zwischen dem Pufferstössel 4 und der Pufferhülse 1 vorgesehen, der an beiden Enden mit Rohrschellen 6, 7 oder dergleichen befestigt ist. Der Gelenkkopf weist eine Bohrung 8 auf, in der ein Bolzen eines Kupplungsflansches fahrzeugseitig oder dergleichen eingreift.

Bei diesem Puffer 10 ist der Gelenkkopf 3 an einem Kasten oder ähnlichem beim Schienenfahrzeug anlenkbar, während der Pufferstössel 4 mit einem Kupplungskopf verbindbar ist, der mit einem Kupplungskopf eines zu kuppelnden Schienenfahrzeugs gekuppelt oder entkuppelt werden kann. Am Pufferstössel 4 kann statt ein Kupplungskopf 4 auch ein anderes Verbindungselement, wie eine Verlängerungs-, Verbindungsstange oder dergleichen angelenkt sein. Es ist endseitig beim Pufferstössel 4 eine äussere Ringnut 9 für ein Befestigen des Kupplungskopfs oder eines Verbindungselementes vorgesehen.

Ein solcher Puffer 10 wird vorzugsweise bei Güter- oder Personenwagen, bei Lokomotiven oder anderen Wagen von Schienenfahrzeugen von Zugskompositionen verwendet. Er dient dabei als Zug- und Stossvorrichtung zum Dämpfen der Druck- und Zugkräfte, die im Betrieb auf die Kupplungen des Schienenfahrzeuges wirken.

In der Pufferhülse 1 ist eine in Fig. 2 strichpunktiert angedeutete Kolbeneinheit 4' verschiebbar angeordnet, die endseitig beim Pufferstössel 4 befestigt ist. Mit dieser Kolbeneinheit 4'ist eine den Innenraum der Pufferhülse 1 bildende Druckkammer 11 abgegrenzt und sie bewirkt im Betrieb einen Druckausgleich in der Druckkammer 11 und bildet somit zusammen mit dieser eine Dämpfungseinrichtung zum Dämpfen der auf den Puffer wirkenden Druck- und Zugkräfte.

Erfindungsgemäss ist die Befestigung der Pufferhülse 1 an dem Gelenckopf 3 des Puffers 10 als lösbare Schraubverbindung ausgebildet, die sich aus einem Aussengewinde 12 im Aussenmantel des Verbindungsflansches 2 und einem mit ihm zusammenwirkenden Innengewinde 13 in der Bohrung der Pufferhülse 1 zusammensetzt.

Um den Zusammenbau des Puffers 10 zu erleichtern, ist der Verbindungsflansch 2 frontseitig mit einer vor dem Aussengewinde 12 angeordneten Zentrierspitze 14 versehen, die annähernd spielfrei in der Bohrung der Pufferhülse 1 einschiebbar oder einpressbar ist. Damit ist eine koaxiale Zentrierung des Verbindungsflansches in der Pufferhülse nach dem Zusammenschrauben sichergestellt. Dieser Verbindungsflansch 2 ist im Bereich des Aussengewindes 12 und der vor diesem folgenden Zentrierspitze 14 hülsenförmig ausgebildet. Er könnte aber ebensogut als Zapfen oder ähnlichem ausgestaltet sein. Aussen bei der Zentrierspitze 14 ist noch eine Ringnut 24 mit einer Dichtung darin angedeutet.

Darüberhinaus weist die Bohrung 1' in der Pufferhülse 1 unmittelbar hinter dem Innengewinde 13 eine ringförmige Abstufung 15 auf, die als Anschlag eines Absatzes 15' des Verbindungsflansches 2 in der Pufferhülse 1 dient. Sehr vorteilhaft ist in dieser Abstufung 15 zwischen ihr und dem Absatz 15' ein Distanzring 25 angeordnet. Mit diesem Distanzring 25 wird bezweckt, dass ein Einjustieren der Drehposition des Gelenckopfs 3 nach dem Einschrauben des Verbindungsflansches 2 und mit ihm des Gelenkkopfs 3 ermöglicht wird. Der Gelenkkopf 3 wird mit seiner Gelenkachse A in Bezug auf die Position des Puffers 10 in seiner Umfangsrichtung stets gleich ausgerichtet. Bei einer Abweichung dieser senkrechten Ausrichtung kann der Distanzring 25 nach einem Lösen des Verbindungsflansches 2 und einem Herausnehmen desselben in seiner Dicke um einen entsprechenden Betrag reduziert werden, bis diese senkrechte Ausrichtung erfüllt ist. Der Distanzring 25 könnte auch durch einen andern mit der erforderlichen Dicke ausgewechselt werden.

Zudem ist diese hinter dem Innengewinde 13 in der Bohrung 1' der Pufferhülse 1 angeordnete ringförmige Abstufung 15 so platziert, dass das Innengewinde 13 annähernd der Länge des Aussengewindes 12 in Axialrichtung entspricht, damit das Aussengewinde vollständig in das Innengewinde einschraubbar ist. Damit weist diese Schraubverbindung die erforderliche Baulänge für eine sichere Befestigung auf.

Um zu verhindern, dass sich diese Schraubverbindung 12, 13 infolge der auf sie im Betrieb wirkenden Druck- und Zugkräfte lösen kann, ist der Puffer 10 mit zwei von aussen zugänglichen und diametral zueinander angeordneten Verdrehsicherungsmitteln 16, 17 versehen, durch welche der Verbindungsflansch 2 im zusammengebauten Zustand an der Pufferhülse 1 dauerhaft fixiert ist. Wie aus Fig. 3 ersichtlich, sind die Verdrehsicherungsmittel 16, 17 als in je einer Ausnehmung 22, 23 in der Pufferhülse 1 und im Verbindungsflansch 2 korrespondierend eingreifender Klemmschuh 18 ausgebildet, die im Verbindungsflansch 2 mit radial angeordneten Schrauben 19 fixiert sind.

Der Pufferstössel 2 ist seinerseits mit einer die freie Verschiebbarkeit des Pufferstössels 4 in der Pufferhülse 1 sicherstellenden Verdrehsicherung versehen, die, wie aus Fig. 2 ersichtlich ist, sich aus zwei zwischen dem Pufferstössel und der Pufferhülse diametral zueinander angeordneten Längskeilen 21 und korrespondierenden Längsnuten 20 in der Bohrung 1' der Pufferhülse 1 zusammensetzt.

Sowohl diese Verdrehsicherungsmittel 16, 17 als auch die zwischen dem Pufferstössel und der Pufferhülse diametral zueinander angeordneten Längskeile 21 und Längsnuten 20 in der Bohrung 1' der Pufferhülse 1 sind mit ihren Achsen in der gleichen Ebene wie die Gelenkachse A des Gelenkkopfs 3 angeordnet. Dies dient als Ausrichtung von letzterem im Puffer 10.

Es ist selbstverständlich im Rahmen der Erfindung möglich, die Verdrehsicherungsmittel für die Pufferhülse 1 und den Pufferstössel 4 anders auszubilden, soweit sie die ihnen vorstehend zugeordnete Funktion erfüllen können. So könnte zum Beispiel nur ein Längskeil und eine Längsnut vorgesehen sein, dies auch umgekehrt, bei dem der Längskeil 21 in der Pufferhülse 1 und die Längsnut im Pufferstössel angeordnet sein könnten.

Der erfindungsgemässe Puffer zeichnet sich aus durch eine konstruktiv einfache und kompakte Bauweise, die im zusammengebauten Zustand eine feste und stabile Verbindung zwischen dem Gelenkkopf 3 und dem Pufferstössel 4 sicherstellt. Es ist hierbei von Vorteil, dass die Bestandteile der Verbindung, nämlich die Gewinde 12 und 13, die Zentrierspitze 14 und die als Anschlag dienende Abstufung 15 sämtlich in der Pufferhülse 1 liegend gut geschützt sind. Die Montage des Puffers kann leicht von einer Seite ohne Drehen durchgeführt werden.

Die Erfindung ist mit den obigen Ausführungsbeispielen ausreichend dargetan. Sie könnte aber noch durch weitere Varianten erläutert sein. Als Befestigungsmittel könnten Fein-, Rund-, Trapez-, Normal- oder andere Gewinde verwendet werden. Auch die Verdrehsicherungsmittel zur Fixierung der Pufferhülse am Verbindungsflansch könnten anders zum Beispiel durch eine oder mehrere Schrauben oder andere Befestigungselemente erfolgen, welche diese direkt miteinander verbinden würden. Im Prinzip könnten je nachdem keine solche Verdrehsicherungsmittel und gegebenenfalls auch keine Zentrierspitze vorgesehen sein. Ebenso könnte auf diesen Distanzring verzichtet werden.

## Patentansprüche

1. Puffer, insbesondere für ein Schienenfahrzeug, der mit einer eine Druckkammer (11) bildenden Pufferhülse (1), einem an dieser stirnseitig durch einen Verbindungsflansch (2) befestigbaren Gelenkkopf (3) und einem gegenüberliegend in der Pufferhülse (1) längsverschiebbar gelagerten Pufferstössel (4) versehen ist, wobei der Gelenkkopf (3) am Schienenfahrzeug anlenkbar ist, während der Pufferstössel (4) mit einem Kupplungskopf oder einem anderen Verbindungelement verbindbar ist, **dadurch gekennzeichnet, dass**
der Verbindungsflansch (2) des Gelenkkopfs (3) an seinem Aussenmantel ein Aussengewinde (12) aufweist, welches mit einem in der Bohrung (1') der Pufferhülse (1) vorgesehenen Innengewinde (13) zum Bilden einer lösbaren Verbindung des Gelenkkopfes mit der Pufferhülse verschraubt ist, wobei der Verbindungsflansch (2) frontseitig vorzugsweise mit einer vor dem Aussengewinde (12) angeordneten Zentrierspitze (14) versehen ist, die annähernd spielfrei in der Bohrung (1') der Pufferhülse (1) verschiebbar oder einpressbar angeordnet ist.

2. Puffer nach Anspruch 1, **dadurch gekennzeichnet, dass**
diese Bohrung (1') der Pufferhülse (1) hinter dem Innengewinde (13) mit einer ringförmigen Abstufung (15) ausgebildet ist, die als vorderseitigen Anschlag eines Absatzes (15') beim Verbindungsflansch (2) in der Pufferhülse (1) dient.

3. Puffer nach Anspruch 1 oder 2, **dadurch gekennzeichnet, dass**
der Verbindungsflansch (2) im zusammengebauten Zustand durch mindestens ein von aussen zugängliches Verdrehsicherungsmittel (16, 17) an der Pufferhülse (1) fixierbar ist.

4. Puffer nach Anspruch 3, **dadurch gekennzeichnet, dass**
der Puffer mit zwei diametral zueinander angeordneten Verdrehsicherungsmitteln (16, 17) versehen ist.

5. Puffer nach Anspruch 3 oder 4, **dadurch gekennzeichnet, dass**
das jeweilige Verdrehsicherungsmittel (16, 17) als in je einer Ausnehmung (22, 23) in der Pufferhülse (1) und im Verbindungsflansch (2) korrespondierend eingreifender Klemmschuh (18) ausgebildet ist, die am Verbindungsflansch (2) mit radial angeordneten Schrauben (19) fixiert sind.

6. Puffer nach einem der Ansprüche 1 bis 5, **dadurch gekennzeichnet, dass**
der Pufferstössel (4) mit einer die freie Längsverstellung des Pufferstössels (4) in der Pufferhülse (1) sicherstellenden Verdrehsicherung (20, 21) versehen ist.

7. Puffer nach Anspruch 6, **dadurch gekennzeichnet, dass**
sich die Verdrehsicherung zumindest aus einem Längskeil (21) aussen am Pufferstössel (4) und einer korrespondierenden Längsnut (20) in der Bohrung (1') der Pufferhülse (1) oder umgekehrt zusammensetzt.

8. Puffer nach einem der Ansprüche 2 bis 7, **dadurch gekennzeichnet, dass**
diese in der Bohrung (1') der Pufferhülse (1) hinter dem Innengewinde (13) angeordnete ringförmige Abstufung (15) und das Innengewinde annähernd der Länge des Aussengewindes (12) in Axialrichtung entsprechen, damit das Aussengewinde mit einer erforderlichen Baulänge vollständig in das Innengewinde einschraubbar ist.

9. Puffer nach einem der Ansprüche 2 bis 8, **dadurch gekennzeichnet, dass**
in der Abstufung (15) ein Distanzring (25) vorhanden ist, der zwischen ihr und dem Absatz (15') angeordnet ist, wobei mit diesem Distanzring (25) ein Einjustieren der Drehposition des Verbindungsflansches (2) und mit ihm des Gelenkkopfs (3) im eingeschraubten Zustand erfolgt, durch welches der Gelenkkopf (3) mit seiner Gelenkachse (A) in Bezug auf die Position des Puffers (10) in seiner Umfangsrichtung stets gleich ausrichtbar ist.

10. Puffer nach Anspruch 9, **dadurch gekennzeichnet, dass**
bei einer Abweichung dieser Ausrichtung des Drehkopfs (3) im eingeschraubten Zustand dieser Distanzring (25) in seiner Dicke um einen entsprechenden Betrag reduzierbar ist, bis diese korrekte Ausrichtung im eingeschraubten Zustand eingestellt ist.
